# EUROPEAN PATENT APPLICATION

(11) **EP 2 271 045 A1**
(43) Date of publication of application: **05.01.2011**
(21) Application number: 08873647.5
(22) Date of filing: 29.12.2008
(51) Int. Cl.: H04L 29/06

(54) **METHOD FOR FIRMWARE DOWNLOADING, METHOD FOR PRE-PROCESSING AND METHOD FOR INTEGRITY AUTHENTICATING BASED ON THE OTA**

(30) Priority: 25.03.2008 CN 200810084536
(71) Applicant: ZTE Corporation, Shenzhen, Guangdong 518057 (CN)
(72) Inventor: ZHANG, Zhengyang, Shenzhen Guangdong 518057 (CN); LU, Chen, Shenzhen Guangdong 518057 (CN); YAO, Fading, Shenzhen Guangdong 518057 (CN)
(74) Representative: Jansen, Cornelis Marinus
(86) International application number: PCT/CN2008/073831
(87) International publication number: WO 2009/117896

(57) **Abstract**

A method and device for firmware downloading pre-processing, a method for verifying the integrity of a firmware, a method for downloading a firmware and the terminal thereof, based on OTA technology, are provided. In the method for downloading a firmware, a predetermined process is performed on the firmware to be downloaded to generate first digest data; the firmware to be downloaded and the first digest data are regarded as the air information to be downloaded by the terminal; the terminal downloads the air information via the radio channel, and obtains the firmware and the first digest data in air information; the terminal performs the predetermined process on the firmware to generate second digest data; the terminal compares the consistency between the first digest data and the second digest data, and in the case that the two are consistent, it is determined that the firmware passes the integrity verification. The method increases the safety of downloading the firmware over the air.

## Description

### Field of the Invention

The present invention relates to an OTA (over the air) technology in wireless communication field, in particular to a method and the device thereof for firmware downloading pre-processing, a method for verifying the integrity of a firmware, a method for downloading a firmware and the terminal thereof, based on the OTA.

### Background of the Invention

As an uploading/downloading technology over the air closely associated with a mobile terminal, the OTA technology has increasingly drawn extensive attention, and as the ceaseless development of the function of the mobile terminal, the OTA technology has been increasingly applied to mobile service.

The mobile terminal user can upload and download data, install various applications, download pictures/rings, upgrade firmware and so on via the OTA technology, undoubtedly, the OTA technology provides a technical guarantee for the functions of the mobile terminal such as loading remote firmware and uploading information, and reduces the costs in operating and upgrading. However, the openness of air channel media increases the potential security risk of the system.

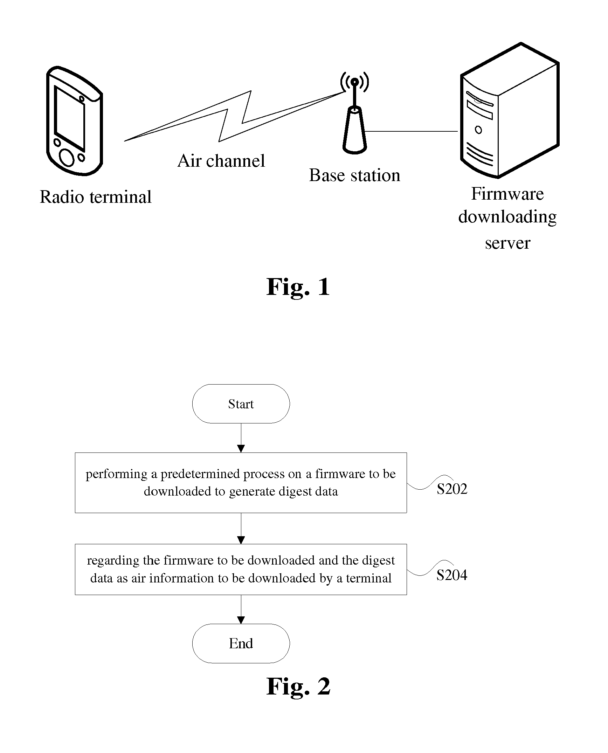

Fig.1 is a schematic view of the wireless communication system supporting the OTA function according to the prior art, as shown in Fig.1, the current firmware downloading process generally comprises the following 3 steps: (1) preparing data: transmitting the firmware to be downloaded to the firmware downloading server; (2) downloading: downloading the remote firmware to the local memory of the mobile terminal over air channel; (3) updating: updating the firmware and upgrading the version of the firmware to a new version.

For the downloading and upgrading firmware with broadcast type, since the service of the firmware with such type would cover more users, the security risk will substantially increase, for example, hackers or other illegal users may filch or crack the password of the downloading server, and replace the firmware to be downloaded with illegal software or implant a virus into it, or intercept the firmware information over the air by setting a pseudo base station and maliciously tamper the firmware to be downloaded, which will be broadly spread via the OTA technology, and if a terminal uses the maliciously tampered firmware, the operator and the user may suffer an inestimable loss. However, there is no technology effectively aimed at the security problem of downloading firmware over the air, which is urgently to be solved.

### Summery of the Invention

The present invention is provided considering the related technology can not solve the security problem in firmware downloading over the air, thus the present invention aims at providing a method and device for firmware downloading pre-processing, a method for verifying the integrity of a firmware, a method for downloading a firmware and the terminal thereof, based on the OTA.

According to one aspect of the present invention, there is provided a method for firmware downloading pre-processing based on the OTA technology, which is used to perform a security pre-processing on the firmware downloaded by a terminal over the air.

The method for firmware downloading pre-processing according to the present invention comprises: performing a predetermined process on the firmware to be downloaded to generate digest data; regarding the firmware to be downloaded and the digest data as air information to be downloaded by the terminal.

Wherein, in particular, the operation of performing the predetermined process on the firmware to be downloaded is to perform a Hash Algorithm on the firmware to be downloaded.

According to another aspect of the present invention, there is provided a method for verifying the integrity of a firmware based on an OTA (Over the Air) technology, which is used for performing an integrity verification on the firmware downloaded by a terminal over the air.

The method for verifying the integrity of a firmware according to the present invention comprises the following processes: downloading air information from a network side, wherein the air information comprises a firmware and first digest data; performing a predetermined process on the firmware to obtain second digest data; comparing the first digest data with the second digest data, and in the case that the two are consistent, judging that the firmware passes the integrity verification.

Wherein, in particular, the above mentioned operation of performing the predetermined process on the firmware is to perform a Hash algorithm on the firmware.

And, the above mentioned predetermined process is the same as the process employed to generate the first digest data at a network side.

According to one another aspect of present invention, there is further provided a method for downloading a firmware based on an OTA technology.

The method for downloading a firmware based on an OTA technology according to the present invention comprises the following processes: performing a predetermined process on the firmware to be downloaded to generate first digest data; regarding the firmware to be downloaded and the first digest data as the air information to be downloaded by a terminal; the terminal downloading the air information via radio channel and obtaining the firmware and the first digest data in the air information; the terminal performing the predetermined process on the firmware to generate second digest data; the terminal comparing the consistency between the first digest data and the second digest data, and judging that the firmware passes the integrity verification in the case that the two are consistent.

Wherein, in particular, the above mentioned operation of performing the predetermined process is to perform a Hash Algorithm.

And, in particular, the above mentioned operation of regarding the firmware to be downloaded and the first digest data as the air information to be downloaded by the terminal comprises is to encrypt the first digest data, and regard the firmware to be downloaded and the encrypted first digest data as the air information to be downloaded by the terminal.

Wherein, in particular, the above mentioned operation of obtaining the firmware and the first digest data in the air information is to obtain the firmware and the encrypted first digest data in the air information; to decrypt the encrypted first digest data to obtain the decrypted first digest data.

According to another aspect of the present invention, there is provided a device for firmware downloading pre-processing based on an OTA technology.

The device for firmware downloading pre-processing based on an OTA technology according to the present invention comprises: a pre-processing module, configured to perform a predetermined process on the firmware to be downloaded to generate digest data; a sending module, configured to send the digest data generated by the pre-processing module and the firmware to be downloaded to a terminal.

According to another aspect of the present invention, there is provided terminal, used for performing integrity verification on a firmware downloaded over the air.

The terminal according to the present invention comprises: a downloading module, configured to download air information from a network side, wherein the air information comprises a firmware and first digest data; a pre-processing module, configured to perform a predetermined process on the firmware downloaded by the downloading module to obtain second digest data; a comparing module, configured to compare the first digest data downloaded by the downloading module and the second digest data obtained by the pre-processing module; an executing module, configured to update a local firmware based on the firmware downloaded by the downloading module in the case that the comparison result of the comparing module is consistent.

With at least one technique scheme provided by the present invention, it can be avoided that the terminal utilizes a tampered firmware or a wrong version of firmware sent from the network side by downloading the digest data and the firmware together, so as to improve the security of the firmware updating.

Other features and advantages of the present invention will be detailed in the description, and partly obvious from the description, or can be understood through implementing the present invention. The purposes and other advantages can be achieved and obtained through the structure specified by the specification, claims and drawings.

### Brief Description of the Drawings

Drawings are provided for the further understanding of the present invention and form a part of the specification, which are used to explain the present invention with embodiments of the present invention rather than limit the present invention, wherein
Fig.1 is a schematic diagram showing the radio communication system supporting OTA function in related art;
Fig.2 is a flow chart showing the method for firmware downloading pre-processing based on an OTA technology according to Method Embodiment 1 of the present invention;
Fig.3 is a flow chart showing the method for verifying the integrity of a firmware based on an OTA technology according to Method Embodiment 2 of the present invention;
Fig.4 is a flow chart showing the method for firmware downloading based on an OTA technology according to Method Embodiment 3 of the present invention;
Fig.5 is a schematic diagram of the process of realizing the method shown in Fig.4;
Fig.6 is a block diagram showing a device for firmware downloading pre-processing based on an OTA technology according to Device Embodiment 1 of the present invention;
Fig.7 is a block diagram showing the terminal according to Device Embodiment 2 of the present invention.

### Detailed Description of the Embodiments

As discussed above, although the OTA can provide a technical guarantee for the functions of mobile terminal, such as remote firmware loading and information uploading, it can not ensure the information security, for example, the security of firmware information.

As to information security, it is needed to introduce a concept of message digest. In cryptography, Message Digest algorithm is an algorithm able to produce a special output format, and is a technology used in combination with message authentication code for verifying the integrity of a message.

The principle of "message digest" is to extract the original data via a certain manner according to a certain operation rule, such an extraction is a "digest". Since the output cryptograph is a value with fixed length obtained by processing the extracted original data, it can not be recovered to the original data, i.e., message digest algorithm is "irreversible", theoretically, it is impossible to get the content of the original data by a reverse operation, therefore it is typically employed to verify the integrity of data and can not be used as the encryption scheme for the original data. Currently popular "message digest" algorithm comprises MD2, MD4, MD5, SHA, SHA-1/256/383/512, etc..

Another algorithm to be introduced is HASH Algorithm, which is a digest algorithm with high intensity and moderate amount of calculation, provides improved versions such as SHA-256, SHA-383, SHA-512, which can generate a digest of up to 512 bits.

Based on above description, the preferred embodiments of the present invention will be described in connection with drawings. It should be appreciated that the preferred embodiments described herein is intended to illustrate and explain the present invention rather than to limit the present invention. It is noted that the embodiments and the features of the embodiments can be combined with each other in case of no contradiction.

### Method Embodiment 1

According to the embodiment of the present invention, there is provided a method for firmware downloading pre-processing based on an OTA technology, which is used to perform a security pre-processing on the firmware downloaded by a terminal over the air.

Fig.2 is a flow chart showing the method for firmware downloading pre-processing based on an OTA technology according to Method Embodiment 1 of the present invention, as shown in Fig.2, the method for firmware downloading pre-processing comprises Steps S202-S204:
Step S202, performing a predetermined process on the firmware to be downloaded to generate digest data, wherein, the predetermined process herein preferably is to perform a Hash algorithm on the firmware to be downloaded;
Step S204, regarding the firmware to be downloaded and the digest data as air information to be downloaded by a terminal.

In above process, the network side also can encrypt the generated digest data, and regard the encrypted digest data and the firmware to be downloaded as the air information to be downloaded by the terminal.

As can be seen from the above embodiment, it can be easy for the terminal side to perform security verification on the firmware to be downloaded subsequently by regarding the digest data and the firmware to be downloaded together as the air information to be downloaded by the terminal at the network side, and thus it is avoided that the terminal uses the tampered firmware.

### Method Embodiment 2

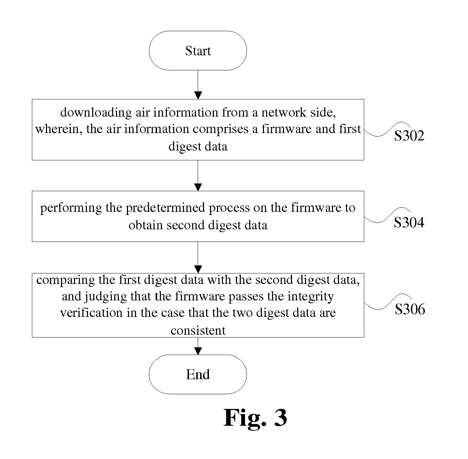

According to the embodiment of the present invention, there is provided a method for verifying the integrity of a firmware based on an OTA technology, which is used for performing an integrity verification on the firmware downloaded by a terminal over the air. Fig.3 shows the process of the method, as shown in Fig.3, the method for verifying the integrity of a firmware comprises the following process (Steps S302-S306):
Step S302, downloading air information from a network side, wherein the air information comprises a firmware and first digest data;
Step S304, performing a predetermined process (preferably, performing a Hash algorithm, which is the same as a Hash algorithm employed to generate the first digest data at the network side) on the firmware to obtain second digest data;
Step S306, comparing the first digest data with the second digest data, and judging that the firmware passes the integrity verification in the case that the two are consistent.

It is to be noted that if the network side has performed encryption process on the first digest data, the terminal needs to decrypt the first digest data in the air information after downloading the air information, and compares the decrypted first digest data with the second digest data obtained by performing the Hash algorithm.

As can be seen from the above description, it can be guaranteed that the updated firmware is a firmware not having been tampered by performing integrity verification on the downloaded firmware at the terminal side, which ensures the reliability of firmware update.

### Method Embodiment 3

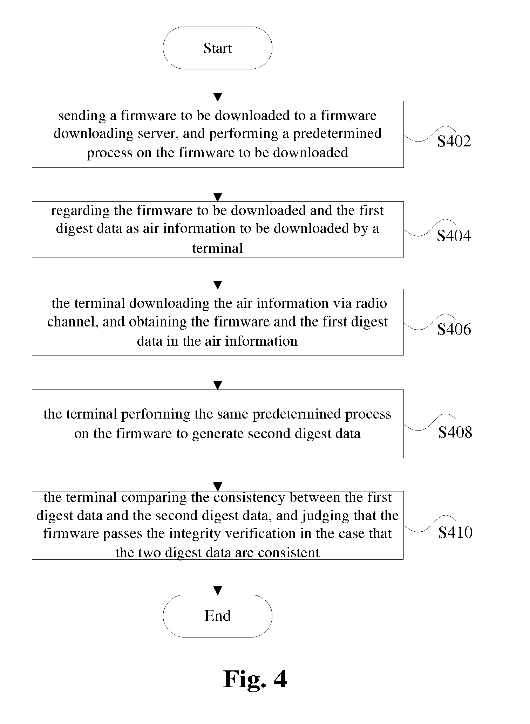

According to the embodiment of the present invention, there is provided a method for downloading a firmware based on an OTA technology. Fig.4 is a flow chart showing the process of the method, as shown in Fig.4, the method for downloading a firmware according to the embodiment of the present invention comprises the following process (Steps S402-S410):
Step S402, sending a firmware to be downloaded to a firmware downloading server, and performing a predetermined process (preferably, Hash algorithm) on the firmware to be downloaded to generate first digest data;
Step S404, regarding the firmware to be downloaded and the first digest data as the air information to be downloaded by a terminal (above processes are the data preparing process of network side);
Step S406, the terminal downloads the air information via radio channel, and obtains the firmware and the first digest data in the air information;
Step S408, the terminal performs the same predetermined process (i.e., same HASH algorithm as that of Step S402) on the firmware to generating second digest data;
Step S410, the terminal compares consistency between the first digest data and the second digest data, and judges that the firmware passes the integrity verification in the case that the two digest data are consistent, and performs firmware update on the firmware. (above processes are the verification and update processes at the terminal side.)

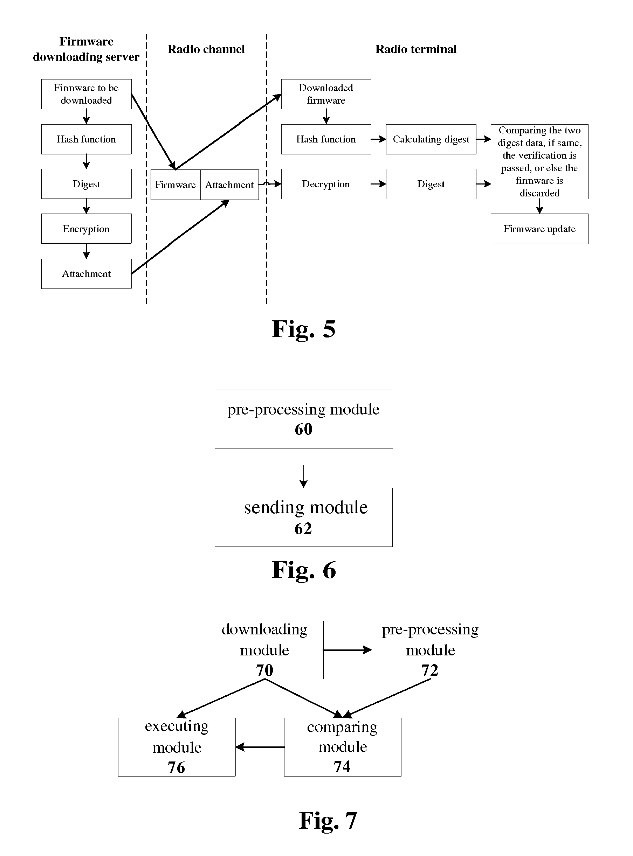

Fig.5 is a schematic diagram showing the realization process of the method shown in Fig.4. Above process can be better understood from the schematic diagram of Fig.5, as shown in Fig.5,

At the network side, after the firmware to be downloaded is sent to the downloading server, Hash function is applied to the firmware to be downloaded to generate digest data, and preferably, the generated digest data can be encrypted, so as to further increase the reliability of the digest, thereafter, the encrypted digest data as an attachment and the firmware (for example, the attachment and firmware are packaged into a data package) are to be downloaded together over the air by the terminal via radio channel.

At the terminal side, after the firmware and the attachment are downloaded via the radio channel, the same Hash function is applied to the downloaded firmware as that of the network side, to calculate digest, and the attachment is decrypted to obtain the digest in the attachment; thereafter, the above two digests are compared with each other; if the two digests are same, the verification is passed, and the firmware can be upgraded or updated, or else, the verification is failed, and the downloaded firmware can be discarded.

By the embodiments provided above, it is realized to perform integrity verification on the downloaded firmware by adding digest data during downloading the firmware, so as to increase the security of firmware downloading.

It can be understood for those skilled in the art that all or part of steps of the methods of above embodiments can be accomplished by the hardware associated with program instructions, above programs can be stored in computer readable media, which comprises ROM/RAMs, disks, CDs, etc.. when executing the program, the following steps are comprised:
performing a predetermined process on a firmware to be downloaded (preferably performing a Hash algorithm) to generate first digest data; and regarding the firmware to be downloaded and the first digest data as air information to be downloaded by a terminal;

Preferably, the following steps are further comprised: downloading the air information from a network side, wherein the air information comprises the firmware and the first digest data; performing a predetermined process on the firmware in the air information (preferably performing a Hash algorithm which is the same as the Hash algorithm employed to generate the first digest data at the network side) to obtain second digest data; comparing the first digest data with the second digest data, and judging that the firmware passes the integrity verification in the case that the two digest data are consistent.

It should also be noted that above description is explained using the Hash function to generate the digest as an example, however the invention is not limited thereto, the digest algorithms, such as MD2, MD4, MD5, also can be employed to achieve the purpose of generating the digest. Moreover, the invention has a better adaptability for applying to systems such as GSM/CDMA/WCDMA/TD-SCDMA/CDMA2000/PHS/SCDMA, mobile terminal products comprising such as WiMAX phone, MODEM and network adapter, may employ the technical scheme provided in the present invention to perform downloading over the air.

### Device Embodiment 1

In an embodiment of the present invention, there is also provided a device for firmware downloading pre-processing based on an OTA technology, preferably, which is used to realize the method of above Method Embodiment 1.

Fig.6 is a block diagram of the device for firmware downloading pre-processing according to the present invention, as shown in Fig. 6, which comprises: a pre-processing module 60 and a sending module 62, wherein the pre-processing module 60 is used for performing a predetermined process on a firmware to be downloaded to generate digest data; a sending module 62, connected to the pre-processing module 60, is used for sending the digest data generated by the pre-processing module 60 and the firmware to be downloaded to a terminal. In particular, the process performed on the firmware by the two modules can be referred to above Method Embodiment 1, which is omitted herein.

### Device Embodiment 2

The embodiment of the present invention also provides a terminal, preferably used for realizing the method of above Method Embodiment 2.

Fig.7 is a block diagram of the terminal according to the embodiment, as shown in Fig.7, the terminal comprises: a downloading module 70, a pre-processing module 72, a comparing module 74, and an executing module 76. These modules are described in detail hereinafter.

Downloading module 70 is used to download air information from a network side, wherein the air information comprises a firmware and first digest data;

Pre-processing module 72, connected to the downloading module 70, is used to perform a predetermined process on the firmware downloaded by the downloading module 70 to obtain second digest data;

Comparing module 74, connected to the downloading module 70 and the pre-processing module 72, is used to compare the first digest data downloaded by the downloading module 70 and the second digest data obtained by the pre-processing module 72;

Executing module 76, connected to the comparing module 74 and the downloading module 70, is used to update a local firmware based on the firmware downloaded by the downloading module 70 in the case that the comparison result of the comparing module 70 is consistent.

The process performed on the received firmware by above each module can be referred to above Method Embodiment 2, which is omitted herein.

In addition, it is easily for those skilled in the art to consider that the content downloaded over the air according to the embodiment of the present invention is not limited to the firmware, the process of all transmitted message, instruction, and data information via radio channel also can be implemented by the present invention and fall into the protected scope of the present invention.

Obviously, those skilled in the art shall understand that individual modules and steps of the present invention can be implemented with general computation devices integrated together or distributed in the network formed by a plurality of computation devices, alternatively implemented with program codes executable by computation devices, which can be stored in memory devices for execution by the computation devices, or implemented with ICs, or several modules or steps can be implemented with a single IC. Thus, the present invention is not limited to any particular hardware and software combination.

Above description is to illustrate the preferred embodiments not limit the present invention. Various alterations and changes to the present invention are apparent to those skilled in the art. The scope defined in claims shall comprise any modification, equivalent substitution and improvement in the spirit and principle of the present invention.

## Claims

1. A method for firmware downloading pre-processing based on an OTA (Over the Air) technology, which is used to perform a security pre-processing on the firmware downloaded by a terminal over the air, **characterized by**, comprising:
performing a predetermined process on the firmware to be downloaded to generate digest data;
regarding the firmware to be downloaded and the digest data as air information to be downloaded by the terminal.

2. The method according to Claim 1, **characterized in that** the operation of performing the predetermined process on the firmware to be downloaded comprises:
performing a Hash algorithm on the firmware to be downloaded.

3. A method for verifying the integrity of a firmware based on an OTA (Over the Air) technology, which is used for performing an integrity verification on the firmware downloaded by a terminal over the air, **characterized by**, comprising:
downloading air information from a network side, wherein the air information comprises a firmware and first digest data;
performing a predetermined process on the firmware to obtain second digest data;
comparing the first digest data with the second digest data, and in the case that the two are consistent, judging that the firmware passes the integrity verification.

4. The method according to Claim 3, **characterized in that** the operation of performing the predetermined process on the firmware comprises:
performing a Hash algorithm on the firmware.

5. The method according to Claim 3, **characterized in that** the predetermined process is the same as the process employed to generate the first digest data.

6. A method for downloading a firmware based on an OTA (Over the Air) technology, **characterized by**, comprising:
performing a predetermined process on the firmware to be downloaded to generate first digest data;
regarding the firmware to be downloaded and the first digest data as the air information to be downloaded by a terminal;
the terminal downloading the air information via radio channel and obtaining the firmware and the first digest data in the air information;
the terminal performing the predetermined process on the firmware to generate second digest data;
the terminal comparing the consistency between the first digest data and the second digest data, and judging that the firmware passes the integrity verification in the case that the two are consistent.

7. The method according to Claim 6, **characterized in that** the operation of performing the predetermined process comprises:
performing a Hash algorithm.

8. The method according to Claim 6, **characterized in that** the operation of regarding the firmware to be downloaded and the first digest data as the air information to be downloaded by the terminal comprises:
encrypting the first digest data, and regarding the firmware to be downloaded and the encrypted first digest data as the air information to be downloaded by the terminal.

9. The method according to Claim 8, **characterized in that** the operation of obtaining the firmware and the first digest data in the air information comprises:
obtaining the firmware and the encrypted first digest data in the air information;
decrypting the encrypted first digest data to obtain the decrypted first digest data.

10. A device for firmware downloading pre-processing based on an OTA (Over the Air) technology, **characterized by**, comprising:
a pre-processing module, configured to perform a predetermined process on the firmware to be downloaded to generate digest data;
a sending module, configured to send the digest data generated by the pre-processing module and the firmware to be downloaded to a terminal.

11. A terminal, used for performing integrity verification on a firmware downloaded over the air, **characterized by**, comprising:
a downloading module, configured to download air information from a network side, wherein the air information comprises a firmware and first digest data;
a pre-processing module, configured to perform a predetermined process on the firmware downloaded by the downloading module to obtain second digest data;
a comparing module, configured to compare the first digest data downloaded by the downloading module and the second digest data obtained by the pre-processing module;
an executing module, configured to update a local firmware based on the firmware downloaded by the downloading module in the case that the comparison result of the comparing module is consistent.
